# EUROPEAN PATENT SPECIFICATION

(11) **EP 3 201 982 B1**
(45) Date of publication and mention of the grant of the patent: **27.05.2020**
(21) Application number: 15848040.0
(22) Date of filing: 29.09.2015
(51) Int. Cl.: H01M 10/0525, H01M 4/38, H01M 4/134, H01M 4/62, H01M 10/058, H01M 4/04, H01M 4/133, H01M 4/36, H01M 4/587, H01M 4/66, H01M 10/052, H01M 4/02

(54) **PRE-LITHIATED SILICON ANODES WITH PVDF BINDER**
IM VORAUS LITHIIERTE SILICIUMANODEN MIT PVDF-BINDEMITTEL
ANODES DE SILICIUM PRÉ-LITHIÉES AVEC LIANT PVDF

(30) Priority: 29.09.2014 US 201462057129 P
(43) Date of publication of application: 09.08.2017
(73) Proprietor: A123 Systems LLC, Waltham, MA 02451 (US)
(72) Inventor: WANG, Jun, Shrewsbury, Massachusetts 01545 (US); GIONET, Paul, Billerica, Massachusetts 01821 (US); CHO, Hungoo, San Jose, California 95120 (US); PINNELL, Leslie J., Framingham, Massachusetts 01702 (US); GRANT, Robert W., Londonderry, New Hampshire, 03053 (US)
(74) Representative: Grey, Ian Michael
(86) International application number: PCT/US2015/053033
(87) International publication number: WO 2016/054105

(56) References cited:
- WO-A1-2014/120718
- US-A1- 2005 130 043
- US-A1- 2008 261 116
- US-A1- 2010 173 198
- US-A1- 2010 173 198
- US-A1- 2013 224 603
- US-A1- 2013 271 085
- US-A1- 2013 327 648
- US-A1- 2014 227 432

## Description

### CROSS REFERENCE TO RELATED APPLICATIONS

This application claims priority to United States Provisional Patent Application No. 62/057,129, entitled "Pre-Lithiated Silicon Anodes with PVDF Binder," filed September 29, 2014.

### TECHNICAL FIELD

This disclosure relates to a lithium ion cell, and more particularly, to fabrication of a silicon anode with polyvinylidene fluoride (PVDF) binder to improve cell cycle life.

### BACKGROUND AND SUMMARY

Lithium ion (Li-ion) batteries are a type of rechargeable battery that produces energy from an electrochemical reaction. In typical Li-ion batteries, the cell includes lithium metal oxides or lithium metal phosphates for the positive electrode (or cathode), carbon/graphite for the negative electrode (or anode), a lithium salt in an organic solvent for the electrolyte, and a porous separator that ensures the electrodes do not touch. In rechargeable Li-ion batteries, the negative electrode is capable of storing a substantial amount of lithium at a lithium chemical potential above that of lithium metal. When a Li-ion battery is charged, lithium ions travel from the positive electrode to the negative electrode and vice-versa when discharged.

Recently, silicon (Si) has found use as an anode electroactive material in Li-ion batteries wherein the silicon may be present as an alloy, intermetallic compound, oxide, etc. Silicon based anode materials are capable of alloying with relatively large amounts of lithium. However, silicon undergoes a relatively large volume change when lithium is incorporated therein. This volume change may be disadvantageous in battery systems since it can cause a loss of capacity, a decrease in cycle life and mechanical damage to the battery structure.

Because of silicon's potential advantages as an anode in a Li-ion battery system, the prior art has made attempts to overcome problems of mechanical damage and swelling. Use has been made to utilize alloys, composites, and other complex structures of silicon and focus has been given to material design and morphology engineering of the silicon, such as nanowires, hollow spheres, etc. In one example approach to overcome swelling, a silicon graphite composite is used. The composite reduces swelling but the softer graphite may deform during cycling while absorbing the expansion of the silicon. However, these changes alone have not been able to successfully utilize silicon based materials to prepare high capacity anode structures for use in Li-ion batteries with high cycle life.

One approach to overcome some of the difficulties associated with silicon anodes is to provide a rigid binder. Binders commonly used with graphite anodes in Li-ion cells, such as polyvinylidene fluoride (PVDF), do not bind silicon anode material together cohesively over successive charging cycles due to the relatively large volume changes of silicon anodes, as described in Loveridge et al in WO 2010/13975A1. Thus, conventional water based binders, such as carboxymethyl cellulose (CMC), polyacrylic acid (PAA), and carboxymethyl cellulose and styrene butadiene composite (CMC/SBR) for example, which are rigid and provide added strength to help counteract the volume expansion issues of Si anodes, may be used with Si. The water based binders are inexpensive and provide for more benign processing conditions due to the elimination of solvents which removes the need for solvent recovery during electrode processing. For example, Hochgatterer et al in Electrochemical and Solid-State letters 11 (5) A76-A80 (2008) shows that using a rigid binder in a Si-C composite electrode significantly enhances the long-term cyclability and capacity retention as compared to a flexible non-water binder, such as PVDF. Thus, the binder in a silicon based anode influences the cycling stability and influences the composite electrode's performance.

Another approach to overcome some of the difficulties associated with silicon anodes is to pre-lithiate the silicon electrochemically active materials. As described in Grant et al in US 20130327648, the surplus of Li helps to reduce the irreversible Li loss and extend the cycling life. In one example, Zhamu et al in US 8,241,793 fabricates an anode by mixing a pre-lithiated, pre-pulverized anode active material with a conductive surface coating and/or a binder material, for example PVDF. Zhamu saw an improved specific capacity and a longer charge-discharge cycle life over 120 cycles. US2010173198 discloses a secondary lithium battery containing a prelithiated anode; US2008261116 discloses a method of depositing silicon on carbon materials and forming an anode for use in lithium ion batteries; and US 2013327648 discloses a method for alkaliating anodes.

The inventors herein have recognized potential issues with the above approaches. Namely, the use of water based binders with a pre-lithiation process for Si anodes may result in improved capacity over the initial cycles of a battery but then may suffer from rapid capacity fading, resulting in a very limited cycle life advantage over un-pre-lithiated anodes.
Another potential issue is that Si anodes fabricated from water based binders including a pre-lithiation process may suffer from poor adhesion.

One approach as recognized by the inventors to address in part the above issues includes fabricating an anode comprising silicon, wherein the anode comprises a PVDF binder and is pre-lithiated. A silicon containing powder may be mixed with the PVDF binder to prepare a thin coating on a copper current collector. The Si/PVDF laminate may be compressed to fabricate the anode. The anode may be treated via a pre-lithiation process to fabricate a pre-lithiated Si/PVDF anode prior to assembly in the Li-ion cell. The Li-ion cell assembly includes a cathode, the anode as prepared, a separator, and an electrolyte solution. The cell with the pre-lithiated Si/PVDF anode may provide high capacity retention over multiple cycles providing a long cell cycle life as compared to a un-pre-lithiated Si/PVDF cell.

It will be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

FIGS. 1A and 1B illustrate the cycle life of a Si/C anode in a Li-ion cell with a PVDF and a CMC binder.
FIG. 2 illustrates an example method flow chart of producing a pre-lithiated Si anode to provide an unexpected long cycle life.
FIG. 3 schematically illustrates an example of the Li-ion cell comprising a pre-lithiated Si anode.
FIG. 4 illustrates the cycle life of Li-ion cells for a PAA based Si/C anode with and without pre-lithiation.
FIG. 5 illustrates the cycle life of Li-ion cells for a PVDF based Si/C anode with and without pre-lithiation.
FIG. 6 illustrates the cycle life of Li-ion cells for a pre-lithiated PVDF based Si/C anode with and without a conductive additive.
FIG. 7 illustrates the cycle life of Li-ion cells for a pre-lithiated Si/C anode with PAA binder or PVDF binder.
FIG. 8 illustrates an example chart for the adhesion strength of various binders in un-pre-lithiated Si/C anodes.

### DETAILED DESCRIPTION

Aspects of this disclosure will now be described by example and with reference to the illustrated embodiments listed above. Components, process steps, and other elements that may be substantially the same in one or more embodiments are identified coordinately and are described with minimal repetition. It will be noted, however, that elements identified coordinately may also differ to some degree.

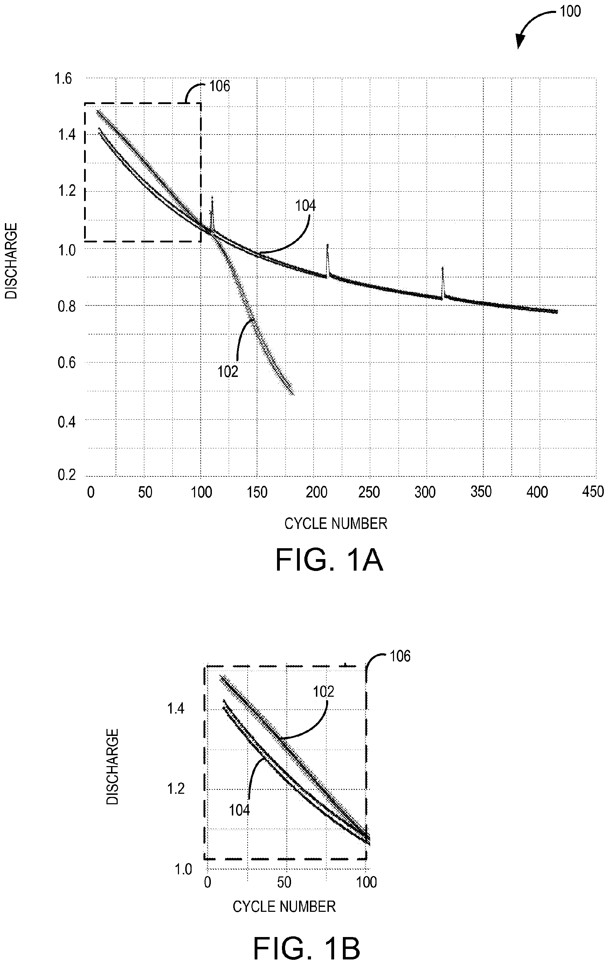

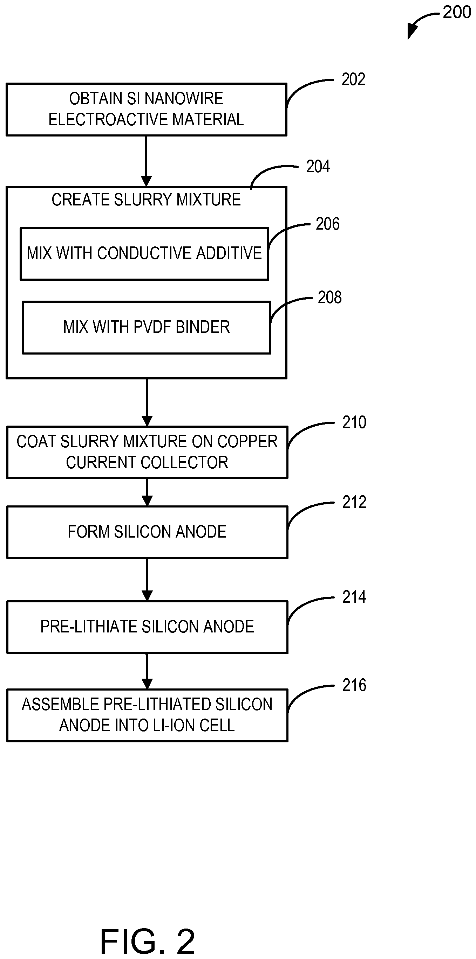

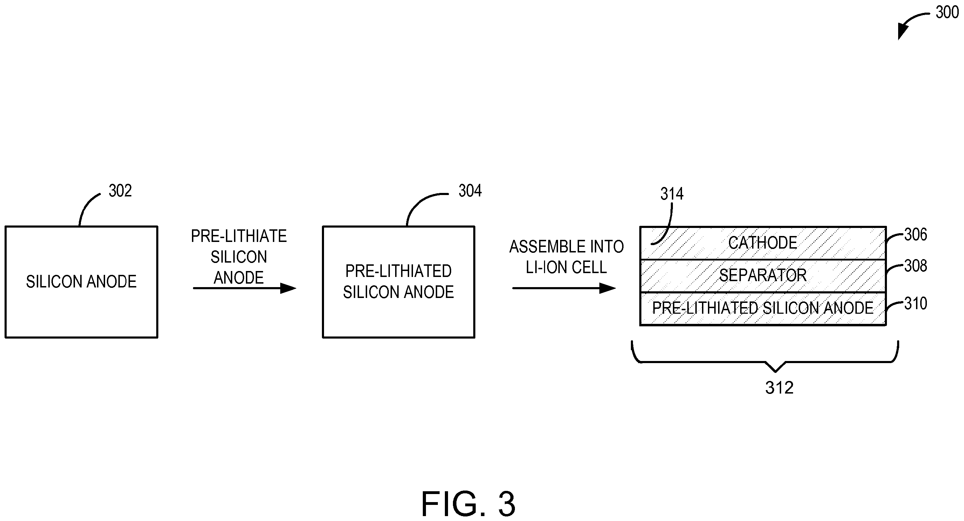

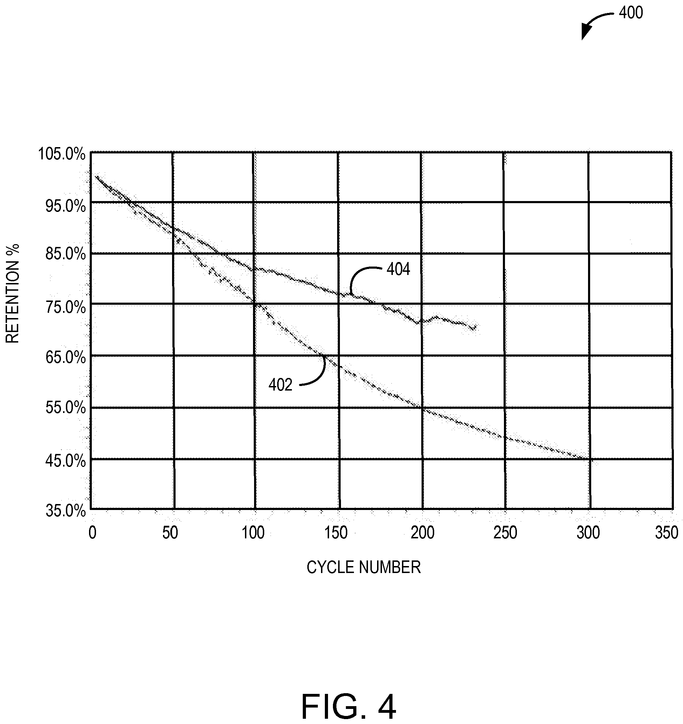

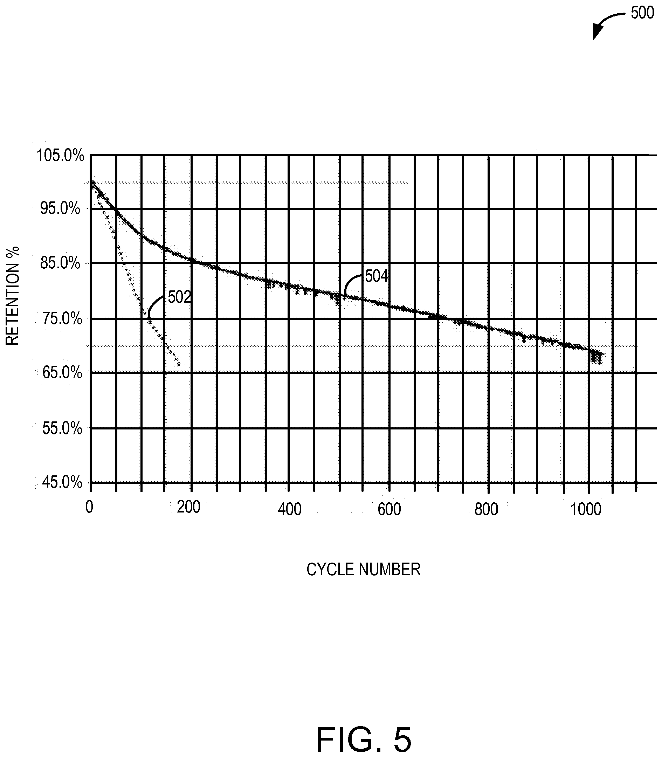

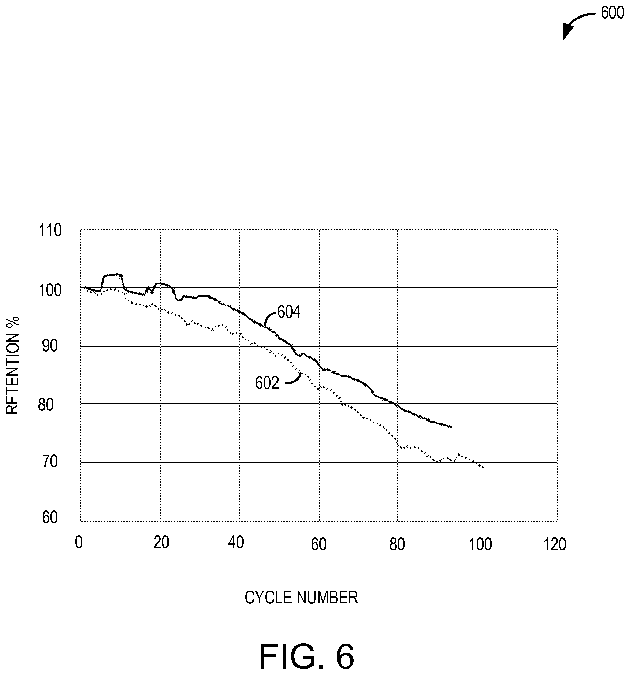

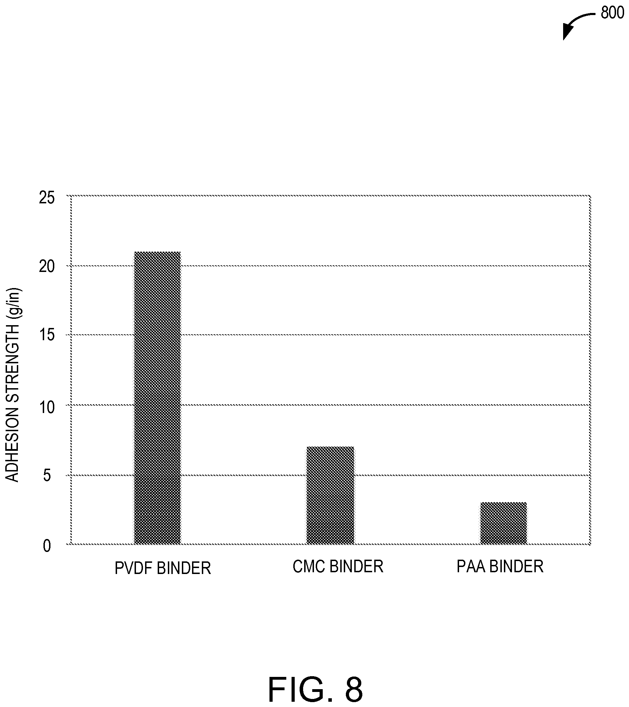

The present application relates to a Li-ion rechargeable battery which comprises a Si anode capable of intercalating and releasing lithium, a positive electrode, a separator, and a nonaqueous electrolytic solution consisting of a lithium salt and at least one organic solvent. The Si anode may be fabricated, as described in FIGS. 2 and 3, to improve the cycle life of the Li-ion cell. The fabrication of the pre-lithiated Si based anode may preserve the nanostructure of the Si. Preserving the nanostructure may counteract the volume changes during cycling which may pulverize the Si nanostructure. The use of a PVDF binder as compared to conventional water based binders in a un-pre-lithiated Si/C anode, shown in FIG. 1, illustrates that PVDF may not perform as well as rigid binders during initial cycling but may show improved adhesion, illustrated in FIG. 8. However, the use of rigid binders in pre-lithiated Si/C anodes, shown in FIG. 4, may lead to adhesion issues which affect the cell cycle life. The use of the flexible PVDF binder in a pre-lithiated Si/C anode shows the cycle life may be improved and shows a cell retention percentage above 70%, shown in FIGS. 5-7. The addition of the PVDF binder before the pre-lithiation process to the Si active material may preserve the morphology of the nanostructure during the pre-lithiation process. The addition of a conductive additive as well as the PVDF binder prior to pre-lithiation may facilitate the movement and distribution of Li ions through the now conductive Si/C/PVDF anode during the pre-lithiation treatment further improving capacity retention of the Li-ion cell during cycling, as illustrated in FIG. 6. Further, the now conductive Si/C/PVDF anode may help to inhibit lithium plating on the anode during the pre-lithiation treatment. Thus, the unique combination of the pre-lithiated Si anode comprising a conductive additive with the flexible non-conventional PVDF binder and the conductive additive shows an unexpected result of extending the cyclability of the Li-ion cells.

Illustrated in FIG. 1A, a graph 100 of an electrochemical cell comprising un-pre-lithiated Si anodes shows that a conventional water based binder, such as CMC, enhances the cyclability and capacity retention as compared to a flexible non-water binder, such as polyvinylidene fluoride (PVDF), up to about 100 cycles. The Li-ion cells may be a prismatic pouch with a Nickel Cobalt Aluminum (NCA) cathode, a Si/C anode, a ceramic coated polyolefin separator and an electrolyte comprising 1M LiPF₆. The cell was cycled at a charge/discharge rate of C/2 and 100% depth of discharge (DOD) over a voltage range of 4.3-3.0V at 23 °C. Graph 100 shows the discharge of a Li-ion cell fabricated from a Si/C anode comprising a CMC water based binder, the CMC Li-ion cell 102, and a Li-ion cell fabricated from a Si/C anode comprising a PVDF binder, the PVDF Li-ion cell 104. Initially, the CMC Li-ion cell 102 may be seen to show a capacity retention higher than the PVDF Li-ion cell 104. The PVDF Li-ion cell 104 initially shows a quicker discharge than the CMC Li-ion cell 102. Illustrated in FIG. 1B, an enlarged portion of graph 100 at 106 is reproduced. The enhanced performance of the CMC Li-ion cell 102, shown by the increased discharge over 100 cycle numbers, as compared to the PVDF Li-ion cell 104 may lead to the choice of conventional water based binders over flexible binders in Si-based anodes. Referring back to FIG. 1A, the CMC Li-ion cell 102 shows a rapid capacity fading after the initial 100 cycles. The PVDF Li-ion cell 104 shows a less consistent decline over time after the initial 100 cycles. Thus, water based binders may be used in Si based anodes over flexible binders for their improved discharge over 100 cycles.

In the prior art, to determine the effectiveness of a specific binder, care is taken to test cycles with cycle numbers of 20 to 100. However, the inventors recognized that additional cycles beyond 100 leads to unexpected results of the disclosed specific anode fabrication.

Turning to FIG. 2, an example method 200 for pre-lithiating a fabricated silicon anode is provided. Silicon as an electroactive material for use in Li-ion batteries provides a material which is capable of alloying with relatively large amounts of lithium.

At step 202, the Si electroactive material may be obtained. In one example, a Si nanostructure electroactive material may be obtained. In another example, a silicon oxide may be obtained. In yet another example, the silicon electroactive material may be a nanoparticle or a nanowire. In the example provided, the Si nanowire electroactive material may be present as a Si graphite composite powder from Si nanowires grown on a graphite base. In other examples, the Si may be present as Si, an alloy or intermetallic compound of Si, or an oxide, carbide, nitride, sulfide, phosphide, selenide, telluride, antimonide, or their mixtures of Si, for example. The Si may be present as a silicon nanostructure. In one example, the Si may be present as Si nanowires. In another example, the Si may be present as Si nanoparticles. The Si electroactive material may be used as a starting material in a non-lithiated form due to the unique processing method provided in the current application. Further, a surface coating, such as a conductive coating, may be applied to protect the silicon and enhance the conductivity. Surface coatings may be commonly included in silicon anode electrochemically active materials. The surface coatings may enable high energy density in Li-ion batteries. In one example, petroleum pitch powder may be added. The surface coating may be present in a percentage range of less than 5 wt. %.

At step 204, a slurry mixture may be created. A slurry is created by mixing the Si electroactive material together with the conductive additive and the binder as well as a non-aqueous liquid. The conductive additive may be different and used in addition to the surface coating applied at step 202.

At step 206, a conductive additive, which is different from the surface coating applied to the electroactive material described in step 202, may be mechanically mixed with the Si nanowire electroactive material. The conductive additive may facilitate better conduction and distribution of Li ions during pre-lithiation. In one example, the conductive additive may be vapor grown carbon fibers. In another example, the conductive additive may be expanded graphite or carbon black. In yet another example, the conductive additive may be graphene particles. The conductive additive may be present at equal to or less than 5 wt. %. In one example, the conductive additive may be present at 1 wt. %. In another example, no conductive additive may be present. In one example, the conductive additive may be mixed with the anode electroactive material.

At step 208, a binder may be mixed with the Si nanowire electroactive material. In one example, the binder may be present as PVDF. The binder may be present at a weight percent between 5 wt. % and 12 wt. %. In one example, the PVDF binder is present at 10 wt. %.

At 210, the slurry made by mixing the Si nanowire electroactive material with a conductive additive and a PVDF binder is coated on a copper (Cu) current collector. The slurry is dried on the current collector and compressed to fabricate the silicon anode at step 212. In one example, the slurry may be coated on both sides of the Cu current collector. In another example, the slurry may be coated on one side of the Cu current collector.

At step 214, the fabricated silicon anode may be pre-lithiated. Pre-lithiation of the Si anode inserts Li ions into the anode active material prior to assembly into a Li-ion cell. In one example, the Si anode may be pre-lithiated using an electrochemical process including a lithium salt or chalcogenide as described in Grant et al in US 8,529,746, which is hereby incorporated by reference herein in its entirety. Further, during the electrochemical pre-lithiation step, use of solid electrolyte interface (SEI) additives may be incorporated. The SEI additives may not be desirable for use in a Li-ion cell. In another example, a Li metal powder may be mixed with the anode composite material. In yet another example, an electrochemical process including Li foil may be used to pre-lithiate an anode.

Thus, a Si anode comprising a PVDF binder and conductive additive increases the effectiveness of the pre-lithiation process such that there is increased efficacy and capacity retention when the Si anode is assembled into a Li-ion cell.

At step 216, the pre-lithiated silicon anode may be assembled into the Li-ion cell. The Li-ion cell may comprise a cathode including a cathode current collector, a separator, an electrolyte, and a pre-lithiated silicon anode fabricated as described above. The Li-ion cell may show improved cycle life over 1000 cycles, retaining about 70% capacity.

One example of fabricating a Si anode following method 200 may include a Si electrochemically active material, a surface coating, a binder in a range of 5-12 wt. %, and a low percent of conductive additive wherein the surface coating and conductive additive are different materials and used for differing purposes. The Si electrochemically active material may be prepared from an anode powder, such as a composite of silicon and graphite wherein the silicon powder comprises silicon nanowires grown on a graphite base. The anode powder may be combined with a binder, wherein the binder may be PVDF. The anode powder and binder mixture may then be coated onto a copper current collector and then calendered to fabricate an anode. The fabricated Si anode may then be pre-lithiated prior to assembly in a Li-ion battery cell as described in method 200.

Thus, method 200 provides a unique approach to fabricating an enhanced pre-lithiated Si anode. The Si anode is fully fabricated prior to the pre-lithiation treatment allowing for the binder and conductive additive to be incorporated prior to the pre-lithiation step. Further, pre-lithiation is performed prior to the Li-ion cell assembly, allowing for SEI forming additives to be incorporated which may not be desirable for use in the assembled Li-ion cell.

FIG. 3 illustrates schematic 300, which illustrates the steps to fabricating a pre-lithiated silicon anode in a Li-ion cell. In another example, a carbon anode may be used in place of the silicon anode.

A silicon anode 302 such as described in regards to FIG. 2 is obtained. The silicon anode 302 may be a fully fabricated electrode. Thus, in some examples, it will be appreciated that the silicon anode 302 may be included in a Li-ion cell with no further treatment. The Si anode may be pre-lithiated to fabricate a pre-lithiated Si anode at 304 using an electrochemical process as described in step 214 of FIG. 2. The pre-lithiated silicon anode may then be assembled into a Li-ion cell 312 as outlined in step 216 in method 200 of FIG. 2. The Li-ion cell may comprise a cathode 306, a separator 308, and the pre-lithiated silicon anode 310. Further, an electrolyte 314, indicated by the shaded box, may be disposed throughout the Li-ion cell. The electrolyte may be in contact with both electrodes.

The cathode 306 may include a cathode active material on a cathode current collector. The cathode active material may be one of a NCA, a Li oxide, such as a Lithium metal oxide for example, a material capable of intercalating/de-intercalating Li ion, etc. Further, a binder may be mixed with the cathode active material.

The separator 308 has no particular restriction on the source material or morphology of the separator for the Li-ion cell of the present application. Additionally, the separator serves to separate the anode and the cathode so as to avoid their physical contact. The preferred separator has high ion permeability, a low electrical resistance, excellent stability against the electrolytic solution and excellent liquid holding properties. Example materials for the separator may be selected from nonwoven fabric or porous film made of polyolefins, such as polyethylene and polypropylene, or ceramic coated materials.

The electrolyte 314 may comprise Li salt, organic solvents, such as organic carbonates, and additives. The electrolyte is present throughout the Li-ion cell and in physical contact with the anode, cathode, and separator. The molar concentration of the lithium salt may be between 0.5 and 2.0 mol/L. The lithium salt may be selected from the group consisting of LiClO₄, LiPF₆, LiBF₄, LiCF₃SO₃, LiN(CF₃SO₂)₂, LiN(CF₃CF₂SO₂)₂, LiN(CF₃SO₂)(C₄F₉SO₂), LiBOB, LiTFSi, and LiC(CF₃SO₂)₃. Further, the electrolyte may comprise aprotic solvents. For example, the solvent may comprise at least one of ethylene carbonate, propylene carbonate, butylene carbonate, dimethyl carbonate, diethyl carbonate, and ethyl methyl carbonate, γ-valerolactone, methyl acetate, methyl propionate, tetrahydrofuran, 2-methyl tetrahydrofuran, tetrahydropyran, dimethoxyethane, dimethoxymethane, ethylene methyl phosphate, ethyl ethylene phosphate, trimethyl phosphate, triethyl phosphate, halides thereof, vinyl ethylene carbonate and fluoroethylenecarbonate, poly(ethylene glycol), diacrylate, and combinations thereof.

Thus, a Li-ion cell may be fabricated comprising the pre-lithiated silicon anode, the cathode, the separator and the electrolyte. The Li-ion cell as described may be fabricated as a prismatic cell in one example. The Li-ion cell may be used in rechargeable batteries to provide the unexpected result of improved cycle life performance due to the particular ordering of the method steps, including fabricating the silicon anode prior to any pre-lithiation treatment.

Turning to FIG. 4, a graph 400 of the cycle of an example Si/C anode in a Li-ion cell is illustrated with a control Si/C anode, which has not undergone pre-lithiation treatment, and a pre-lithiated Si/C anode. A un-pre-lithiated Li-ion cell 402 comprising a Si/C anode includes a water based binder PAA. A pre-lithiated Si/C anode 404 includes the water based binder PAA. The Li-ion cell is fabricated as a prismatic pouch with a Nickel Cobalt Aluminum (NCA) cathode, a Si/C anode, a ceramic coated polyethylene separator and an electrolyte comprising 1M LiPF₆. The cell was cycled at a charge/discharge rate of C/2 and 100% depth of discharge (DOD) over a voltage range of 4.3-3.0V at 23 °C. Both the control anode and the pre-lithiated anode use polyacrylic acid (PAA) as the binder. The retention percentage of the PAA anode in the control cell 402 and the PAA pre-lithiated anode cell 404 are illustrated in graph 400. The PAA based Si/C anode which was pre-lithiated showed a higher efficiency and retention percentage than the PAA based Si/C anode in the control cell. Thus, pre-lithiation improved the cell performance over the control cell, as seen from line 404 being above line 402, however, the use of PAA as the binder led to degradation of the anode after about 250 cycles as the pre-lithiated PAA anode showed adhesion issues.

Turning to FIG. 5, a graph 500 of the cycle life of an example Si/C anode in a Li-ion cell is illustrated with PVDF used as the binder for a control Si/C anode, which has not undergone pre-lithiation treatment, and a pre-lithiated Si/C anode. The Li-ion cell may be a prismatic pouch with a Nickel Cobalt Aluminum (NCA) cathode, a Si/C anode, a ceramic coated polyolefin separator and an electrolyte comprising 1M LiPF₆. The cell was cycled at a charge/discharge rate of C/2 and 100% depth of discharge (DOD) over a voltage range of 4.3-3.0V at 23 °C. The PVDF Si/C anode without pre-lithiation treatment Li-ion cell retention percentage is shown at 502 and the PVDF Si/C anode with pre-lithiation treatment Li-ion cell retention percentage is shown at 504. Both cell retention percentages are seen to decrease upon initial cycling. The un-pre-lithiated Li-ion cell 502 retention percent is seen to decrease quickly in comparison to the pre-lithiated Li-ion cell 504 retention percent. Further, the pre-lithiated Li-ion cell 504 retention percent 504 substantially levels off and shows a cell retention percent of about 70% after 1000 cycles. The unique combination of a Si/C anode comprising a PVDF binder and the use of the pre-lithiation process provides a surprisingly good cycle life. Thus, as an unexpected result, the importance of pre-lithiation, specifically as a well-designed PVDF based Si/C anode are key for extending the cyclability of the Li-ion cells.

The combination of the flexibility and inherent resilience of the PVDF binder, which allows for expansion and contraction of Si, and the pre-lithiation process, which provides Li ions to the anode before use in a Li-ion cell, provides the unexpected properties seen in the pre-lithiated Si/PVDF anode used in high energy density rechargeable cells. Thus, the PVDF binder combined with the Si/C anode active material prior to pre-lithiation provides an anode with a flexible binder which may allow for initial pulverization as the anode expands and contracts during initial cycling of the cell resulting in an initial capacity decrease. However, the flexibility of the binder, allows for the capacity retention to level off over about 1000 cycles, thereby extending the cycle life of the electrochemical cell. This approach relies on the fabrication of the electrode with the binder prior to the pre-lithiation step and provides the unexpected result of extended cycle life.

FIG. 6 shows graph 600 illustrating the unexpected result of mixing a conductive additive along with a binder in a Si graphite composite powder which is surface coated to fabricate a Si anode prior to pre-lithiation. For example, the anode powder may comprise a surface coating, which is a conductive coating, to enhance conductivity, prior to fabricating the electrode. In one example, petroleum pitch material may be used as the surface coating precursor for the composite powder. The pitch material may be mixed with the anode powder and then further heat treated in an inert atmosphere. The powder mixture may then be allowed to cool prior to mixing in a binder and a conductive additive to produce a slurry to coat an electrode. The Li-ion cell comprising a pre-lithiated Si/C/PVDF anode with no conductive additive 602 shows a lower retention percent over cycling as compared to a Li-ion cell comprising a pre-lithiated Si/C/PVDF anode with a conductive additive 604. In one example, the conductive additive may be expanded graphite. In another example, the conductive additive may be vapor grown carbon fibers, expanded graphite, carbon black or combinations thereof. The conductive additive may enhance the pre-lithiation process and facilitate the Li migration through the Si/C/PVDF matrix, thereby improving the pre-lithiation process. This is contrary to the conventional use of conductive additives which improve the overall cell conductivity but may not necessarily enhance cycle life. Adding the conductive additive prior to the pre-lithiation process shows the unexpected benefit of improving the pre-lithiation process when a PVDF binder is used in a silicon anode.

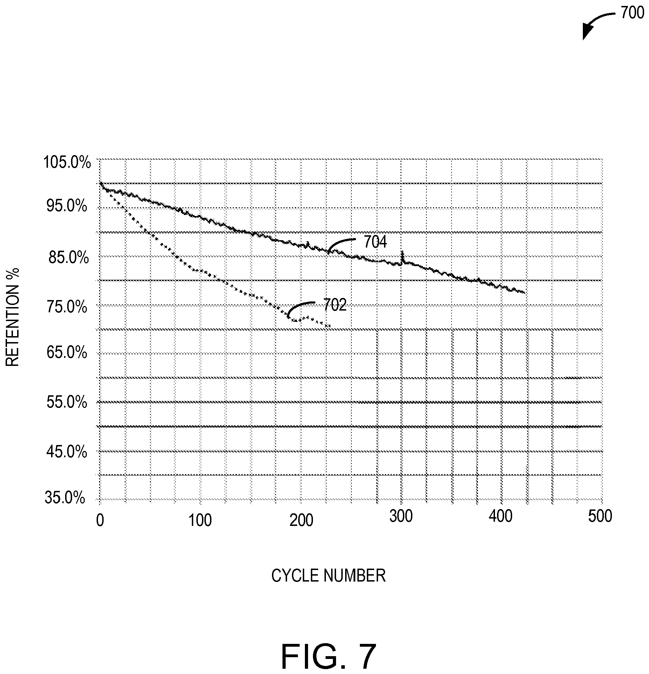

FIG. 7 illustrates by graph 700 a comparison of a pre-lithiated silicon anode fabricated using a conventional water based binder, PAA, and a flexible binder, PVDF. Li-ion cells were fabricated comprising the Si/C anode including a binder and a conductive additive. The PAA Li-ion cell 702 shows a lower retention percent than the PVDF Li-ion cell 704. Thus, the PAA Li-ion cell 702 including a binder did not show as big an improvement as the PVDF Li-ion cell 704. This unexpected result shows that the specific processing steps of mixing a PVDF binder as well as a conductive additive with a silicon nanowire electroactive material prior to pre-lithiating, improves the retention percent over cycling. The combination of the PVDF and the conductive additive provide a synergistic effect between the electrode components and the pre-lithiation electrochemical reaction resulting in an improved pre-lithiated Si/C anode which shows an unexpected result of increased cycle life.

Turning to FIG. 8, a chart 800 is illustrated which shows the adhesion strengths for PVDF versus conventional water based binders, CMC and PAA. The PVDF in an un-pre-lithiated Si/C anode shows an adhesion strength of approximately three times more than the CMC binder and approximately seven times more than the PAA binder. The water based binders low adhesion strength leads to poor cycle life performance when prepared using the example method steps as outlined in FIGS. 2 and 3. Thus, the use of PVDF as a binder with a Si/C anode prior to pre-lithiation provides a result of good adhesion strength and an unexpected long cycle life extending to at least 1000 cycles with about 70% retention capacity.

In this way, Li-ion cells were made using pre-lithiated Si/C anodes wherein the anode comprises a silicon graphite composite, PVDF binder, and a carbon conductive additive. The pre-lithiated Si/C anodes comprising PVDF and a carbon powder may stabilize capacity loss after 100 cycles and show the unexpected result of improving cycle life over 1000 cycles at a C/2 charge/discharge rate, providing about 70% capacity retention. This Si anode combination along with pre-lithiation following anode fabrication provides an unexpected result of extended cycle life given the extensive research and recommendation for the use of water based binders to mitigate the effects of silicon expansion.

Those skilled in the art will also understand that there can be many variations made to the operations of the techniques explained above while still achieving the same objectives of the invention. Such variations are intended to be covered by the scope of this invention. As such, the foregoing description of embodiments of the invention are not intended to be limiting. Rather, any limitations to embodiments of the invention are presented in the following claims.

Various modifications of the present disclosure, in addition to those shown and described herein, will be apparent to those skilled in the art of the above description. Such modifications are also intended to fall within the scope of the appended claims.

It is appreciated that all reagents are obtainable by sources known in the art unless otherwise specified.

Patents, publications, and applications mentioned in the specification are indicative of the levels of those skilled in the art to which the invention pertains.

The foregoing description is illustrative of particular embodiments of the invention, but is not meant to be a limitation upon the practice thereof.

The foregoing discussion should be understood as illustrative and should not be considered limiting in any sense. While the inventions have been particularly shown and described with references to preferred embodiments thereof, it will be understood by those skilled in the art that various changes in form and details may be made therein without departing from the scope of the inventions as defined by the claims.

The corresponding structures, materials, acts and equivalents of all means or steps plus function elements in the claims below are intended to include any structure, material or acts for performing the functions in combination with other claimed elements as specifically claimed.

Finally, it will be understood that the articles, systems, and methods described hereinabove are embodiments of this disclosure-non-limiting examples for which numerous variations and extensions are contemplated as well. Accordingly, this disclosure includes all novel and non-obvious combinations and sub-combinations of the articles, systems, and methods disclosed herein.

## Claims

1. A Li-ion battery comprising:
a cathode comprising a cathode current collector and an electroactive cathode material disposed on one or both sides of the cathode current collector;
a pre-lithiated anode;
a separator material between the cathode and the anode;
an electrolyte in contact with the cathode, the anode, and the separator;
the pre-lithiated anode comprising an anode current collector and a silicon electroactive anode material disposed on one or both sides of the anode current collector, wherein the silicon electroactive anode material includes a carbon based conductive additive;
wherein the silicon electroactive anode material includes a silicon nanostructure, and a PVDF binder present in a range of 5 to 12 wt. % of the silicon electroactive anode material;
wherein the silicon nanostructure further includes a surface coating of petroleum pitch powder present at a weight percent less than or equal to 5 wt. %; and
wherein the conductive additive and the PVDF binder are added to silicon electroactive anode material prior to the pre-lithiation of the anode.

2. The Li-ion battery of claim 1, wherein the conductive additive is present at less than 5 wt. %.

3. The Li-ion battery of claim 2, wherein the carbon based conductive additive is vapor grown carbon fibers, expanded graphite, carbon black, or combinations thereof.

4. The Li-ion battery of claim 1, wherein the petroleum pitch powder is carbonized.

5. The Li-ion battery of claim 1, wherein the anode current collector is copper.

6. The Li-ion battery of claim 1, wherein the silicon nanostructure is a powder composite of silicon and graphite.

7. The Li-ion battery of claim 6, wherein the powder composite is silicon particles with a carbon base.

8. The Li-ion battery of claim 6, wherein the silicon is in the form of silicon nanowires.

9. A method of preparing a pre-lithiated anode for use in a Li-ion cell comprising: receiving the negative electrode active material wherein the negative electrode active materials is a powder composite of silicon and graphite and the silicon is present as nanostructures;
combining the negative electrode active material with a conductive additive at less than 5 wt. % and a PVDF binder present in a range of 5 to 12 wt. % to produce a mixture;
coating the mixture on a copper current collector to form a laminate;
compressing the laminate to yield an anode; and
pre-lithiating the anode wherein the conductive additive and the PVDF binder are added to silicon electroactive anode material prior to the pre-lithiation of the anode,
wherein the silicon nanostructures further include a surface coating of petroleum pitch powder present at a weight percent less than or equal to 5 wt. %.

10. The method of claim 9, wherein the silicon nanostructures are silicon nanowires grown on a graphite base.

11. The method of claim 9, wherein the conductive additive is vapor grown carbon fibers, expanded graphite, carbon black or combinations thereof.

## Patentansprüche

1. Lithium-Ionen-Batterie, umfassend:
eine Kathode, die einen Kathodenstromkollektor und ein elektroaktives Kathodenmaterial, das auf einer oder beiden Seiten des Kathodenstromkollektors angeordnet ist, umfasst;
eine im Voraus lithiierte Anode;
ein Separatormaterial zwischen der Kathode und der Anode;
einen Elektrolyt in Kontakt mit der Kathode, der Anode und dem Separator;
wobei die im Voraus lithiierte Anode einen Anodenstromkollektor und elektroaktives Anodenmaterial aus Silicium, das auf einer oder beiden Seiten des Anodenstromkollektors angeordnet ist, umfasst, wobei das elektroaktive Anodenmaterial aus Silicium ein kohlenstoffbasiertes leitfähiges Additiv beinhaltet;
wobei das elektroaktive Anodenmaterial aus Silicium eine Siliciumnanostruktur und ein PVDF-Bindemittel, das in einem Bereich von 5 bis 12 Gew.-% des elektroaktiven Anodenmaterials aus Silicium vorhanden ist, beinhaltet;
wobei die Siliciumnanostruktur ferner eine Oberflächenbeschichtung aus Petroleumpechpulver, das mit einem Gewichtsanteil von weniger oder gleich 5 Gew.-% vorhanden ist, beinhaltet; und
wobei das leitfähige Additiv und das PVDF-Bindemittel dem elektroaktiven Anodenmaterial aus Silicium vor der Vorablithiierung der Anode zugefügt wird.

2. Lithium-Ionen-Batterie nach Anspruch 1, wobei das leitfähige Additiv mit weniger als 5 Gew.-% vorhanden ist.

3. Lithium-Ionen-Batterie nach Anspruch 2, wobei das kohlenstoffbasierte leitfähige Additiv durch Verdampfung gewachsene Kohlenstofffasern, expandierter Graphit, Ruß oder Kombinationen daraus ist.

4. Lithium-Ionen-Batterie nach Anspruch 1, wobei das Petroleumpechpulver karbonisiert ist.

5. Lithium-Ionen-Batterie nach Anspruch 1, wobei der Anodenstromkollektor Kupfer ist.

6. Lithium-Ionen-Batterie nach Anspruch 1, wobei die Siliciumnanostruktur ein Pulververbundstoff aus Silicium und Graphit ist.

7. Lithium-Ionen-Batterie nach Anspruch 6, wobei der Pulververbundstoff Siliciumpartikel mit einer Kohlenstoffbasis ist.

8. Lithium-Ionen-Batterie nach Anspruch 6, wobei das Silicium in der Form von Siliciumnanodrähten vorliegt.

9. Verfahren zum Herstellen einer im Voraus lithiierten Anode zur Verwendung in einer Lithium-Ionen-Batterie, umfassend:
Aufnehmen des aktiven Materials der negativen Elektrode, wobei das aktive Material der negativen Elektrode ein Pulververbundstoff aus Silicium und Graphit ist und das Silicium als Nanostrukturen vorhanden ist;
Kombinieren des aktiven Materials der negativen Elektrode mit einem leitfähigen Additiv mit weniger als 5 Gew.-% und einem PVDF-Bindemittel, das in einem Bereich von 5 bis 12 Gew.-% vorhanden ist, um ein Gemisch zu erzeugen;
Auftragen des Gemischs auf einen Kupfer-Stromkollektor, um einen Schichtstoff zu bilden;
Komprimieren des Schichtstoffs, um eine Anode hervorzubringen; und
Vorablithiieren der Anode, wobei das leitfähige Additiv und das PVDF-Bindemittel dem elektroaktiven Anodenmaterial aus Silicium vor der Vorablithiierung der Anode zugefügt werden,
wobei die Siliciumnanostrukturen ferner eine Oberflächenbeschichtung aus Petroleumpechpulver beinhalten, das mit einem Gewichtsanteil von weniger oder gleich 5 Gew.-% vorhanden ist.

10. Verfahren nach Anspruch 9, wobei die Siliciumnanostrukturen auf einer Graphitbasis gewachsene Siliciumnanodrähte sind.

11. Verfahren nach Anspruch 9, wobei das leitfähige Additiv durch Verdampfung gewachsene Kohlenstofffasern, expandierter Graphit, Ruß oder Kombinationen daraus ist.

## Revendications

1. Batterie lithium-ion comprenant :
une cathode comprenant un collecteur de courant de cathode et un matériau de cathode électroactif disposé sur un ou les deux côtés du collecteur de courant de cathode ;
une anode pré-lithiée ;
un matériau séparateur entre la cathode et l'anode ;
un électrolyte en contact avec la cathode, l'anode et le séparateur ;
l'anode pré-lithiée comprenant un collecteur de courant d'anode et un matériau d'anode électroactif de silicium disposé sur un ou les deux côtés du collecteur de courant d'anode, dans laquelle le matériau d'anode électroactif de silicium comporte un additif conducteur à base de carbone ;
dans laquelle le matériau d'anode électroactif de silicium comporte une nanostructure de silicium, et un liant PVDF présent dans une plage allant de 5 à 12 % en poids du matériau d'anode électroactif de silicium ;
dans laquelle la nanostructure de silicium comporte en outre un revêtement de surface de poudre de brai de pétrole présent à un pourcentage en poids inférieur ou égal à 5 % en poids ; et
dans laquelle l'additif conducteur et le liant PVDF sont ajoutés au matériau d'anode électroactif de silicium avant la pré-lithiation de l'anode.

2. Batterie lithium-ion selon la revendication 1, dans laquelle l'additif conducteur est présent à moins de 5 % en poids.

3. Batterie lithium-ion selon la revendication 2, dans laquelle l'additif conducteur à base de carbone est constitué de fibres de carbone développées en phase vapeur, de graphite expansé, de noir de carbone ou des combinaisons de ceux-ci.

4. Batterie lithium-ion selon la revendication 1, dans laquelle la poudre de brai de pétrole est carbonisée.

5. Batterie lithium-ion selon la revendication 1, dans laquelle le collecteur de courant d'anode est en cuivre.

6. Batterie lithium-ion selon la revendication 1, dans laquelle la nanostructure de silicium est un composite en poudre de silicium et de graphite.

7. Batterie lithium-ion selon la revendication 6, dans laquelle le composite en poudre est constitué de particules de silicium à base de carbone.

8. Batterie lithium-ion selon la revendication 6, dans laquelle le silicium est sous la forme de nanofils de silicium.

9. Procédé de préparation d'une anode pré-lithiée à utiliser dans une cellule lithium-ion comprenant : la réception du matériau actif d'électrode négative dans lequel les matériaux actifs d'électrode négative sont un composite en poudre de silicium et de graphite et le silicium est présent sous forme de nanostructures ;
la combinaison du matériau actif d'électrode négative avec un additif conducteur à moins de 5 % en poids et un liant PVDF présent dans une plage allant de 5 à 12 % en poids pour produire un mélange ;
le revêtement du mélange sur un collecteur de courant en cuivre pour former un stratifié ;
la compression du stratifié pour produire une anode ; et
la pré-lithiation de l'anode dans lequel l'additif conducteur et le liant PVDF sont ajoutés au matériau d'anode électroactif de silicium avant la pré-lithiation de l'anode,
dans lequel les nanostructures de silicium comportent en outre un revêtement de surface de poudre de brai de pétrole présent à un pourcentage en poids inférieur ou égal à 5 % en poids.

10. Procédé selon la revendication 9, dans lequel les nanostructures de silicium sont des nanofils de silicium développés sur une base de graphite.

11. Procédé selon la revendication 9, dans lequel l'additif conducteur est constitué de fibres de carbone développées en phase vapeur, de graphite expansé, de noir de carbone ou des combinaisons de ceux-ci.
